# EUROPEAN PATENT SPECIFICATION

(11) **EP 2 820 461 B1**
(45) Date of publication and mention of the grant of the patent: **08.04.2020**
(21) Application number: 13711491.4
(22) Date of filing: 28.02.2013
(51) Int. Cl.: G02B 6/42

(54) **CHIP ASSEMBLY CONFIGURATION WITH DENSELY PACKED OPTICAL INTERCONNECTS**
KONFIGURATION EINER CHIP-ANORDNUNG MIT OPTISCHEN VERBINDUNGEN MIT HOHER PACKUNGSDICHTE
CONFIGURATION D'ENSEMBLE PUCE DOTÉE D'INTERCONNEXIONS OPTIQUES À FORTE DENSITÉ

(30) Priority: 01.03.2012 US 201213410113
(43) Date of publication of application: 07.01.2015
(73) Proprietor: Oracle International Corporation, Redwood Shores, CA 94065 (US)
(72) Inventor: RAJ, Kannan, San Diego, California 92127 (US); HUANG, Dawei, San Diego, California 92129 (US); ANESHANSLEY, Nicholas E., Poway, California 92064 (US); SZE, Theresa, San Diego, California 92122 (US); MCELFRESH, David K., San Diego, CA 92129 (US)
(74) Representative: D Young & Co LLP
(86) International application number: PCT/US2013/028355
(87) International publication number: WO 2013/130831

(56) References cited:
- WO-A1-94/01987
- WO-A1-2005/074172
- WO-A1-2007/023713
- US-A1- 2002 126 356
- US-A1- 2003 038 297
- US-A1- 2005 025 434

## Description

### BACKGROUND

### Field

The present disclosure generally relates to a chip assembly configuration that accommodates semiconductor chips. More specifically, the present disclosure relates to a chip assembly configuration that includes a substrate with short-length transmission lines that facilitates densely packed optical interconnects.

### Related Art

As integrated-circuit (*IC*) technology continues to scale to smaller critical dimensions, it is increasingly difficult for existing interconnections to provide suitable communication and integration characteristics, such as: high bandwidth, low latency, low power consumption, reliability, and low cost. These challenges are particularly acute in computer systems that include next-generation multi-processor architectures, which require high-speed communication among a large number of multi-core processors and memories.

Higher bandwidth communication among components in a computer system can be achieved by increasing the number of signal lines in the interconnects and/or by increasing the data rate per signal line. However, the pin count on a semiconductor die is currently limited by finite reticle sizes, as well as chip configuration, fabrication and assembly constraints. This pin-count constraint is also limiting improvements in the performance of the input/output (I/O) ports in processors. For example, at data rates of 20 Gbps and higher, the number of differential pins needed for high-bandwidth communication is expected to exceed 1000.

In addition, as the data rate across a transmission line increases, the effective communication distance decreases because of: losses caused by reflections, absorption, dispersion, crosstalk, crossover of traces and skew variation between channels. Even when low-loss (and higher-cost) dielectric materials are used, electrical transmission lines have a finite transmission-distance bandwidth product. While other communication techniques, such as transmitter FIR filters, analog linear equalization, adaptive decision feedback equalization and timing recovery, can be used to improve communication performance, these communication techniques typically increase power consumption and latency. As a consequence, limitations on the data rates of transmission lines are increasingly limiting the performance of computing systems.

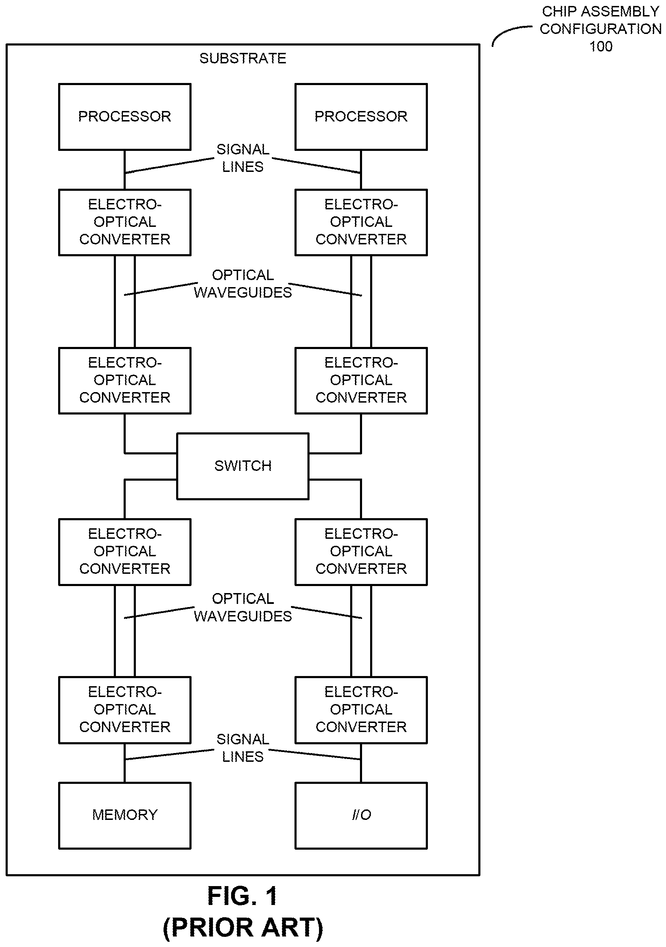

In principle, optical interconnects offer a way to overcome the aforementioned electrical interconnect bottlenecks, and can thereby provide: high bandwidth, communication over long distances, low losses, low crosstalk, low power consumption and electromagnetic immunity. FIG. 1 presents a block diagram illustrating a top view of an existing chip assembly configuration 100 that uses optical interconnects to facilitate communication among components (such as a processor, memory, a router, a switch, etc.).

However, this chip assembly configuration has several disadvantages. In particular, the optical interconnects consume valuable real estate in the chip assembly configuration, which can increase cost. Moreover, because of constraints on component density, the distances between the components can increase, which can increase latency. Furthermore, thermal management of adjacent optical and electrical components in a chip assembly configuration can be difficult.

Hence, what is needed is a chip assembly configuration without the above-described problems. US 2003/0038297 discloses an apparatus, system and method for transmission of information between microelectronic devices. WO 94/01987 discloses a component module comprised by at least one internal or external carrier substrate, at least one circuit with at least thereto belonging surrounding components or components.

### SUMMARY

The presently claimed subject matter is defined in the claims.

One embodiment of the present disclosure provides a chip assembly configuration that includes a substrate with a first surface and a second surface on an opposite side of the substrate from the first surface. The substrate also includes first connectors disposed on the first surface and second connectors disposed on the second surface, where the first connectors and the second connectors are electrically coupled by interconnectors through the substrate. A given interconnector includes two vias electrically coupled by a signal line that includes a region approximately parallel to one of the first surface and the second surface. These vias extend partially through the substrate. Furthermore, a length of the region is less than or equal to 1 mm. Moreover, the chip assembly configuration includes an integrated circuit positioned adjacent to the first surface and electrically coupled to the first connectors. Furthermore, the chip assembly configuration includes a conversion mechanism positioned adjacent to the second surface and electrically coupled to the second connectors. This conversion mechanism converts electrical signals from the integrated circuit into corresponding first optical signals and converts second optical signals to the integrated circuit into corresponding second electrical signals. Note that the first optical signals and the second optical signals are communicated in the chip assembly configuration using an optical interconnect.

Additionally, the substrate may include: a printed circuit board and/or a interposer. For example, the substrate may include: a semiconductor, an organic material, a ceramic, a glass, and/or a plastic.

In some embodiments, the chip assembly configuration includes sources and detectors optically coupled to the optical interconnect. Alternatively, the sources and detectors associated with the optical interconnect may be external to the chip assembly configuration.

Furthermore, the optical interconnects may include: an optical fiber and/or an optical waveguide.

Note that the first connectors and the integrated circuit may be electrically coupled by: solder, a ball-grid array, a socket, an interposer, and/or a land grid array. Moreover, the second connectors and the conversion mechanism may be electrically coupled by: solder,a ball-grid array, a socket, an interposer, and/or a land grid array.

In some embodiments, an average impedance of electrical paths associated with the first connectors, the second connectors and the interconnectors approximately matches an average impedance of drivers in the integrated circuit and the conversion mechanism. For example, the average impedance may be approximately 50 Ω. Furthermore, a dominant pole in a transfer characteristic associated with the first connectors, the second connectors and the interconnectors may facilitate communication between the integrated circuit and the conversion mechanism at data rates greater than 10 Gbps.

Additionally, the chip assembly configuration may include a heat sink thermally coupled to the integrated circuit on an opposite side of the integrated circuit from the substrate.

In some embodiment, a given connector includes a straight-through via electrically coupled by signal lines from the first surface and second surface, wherein the via extends from the first surface to the second surface through the substrate.

Another embodiment provides a system that includes the chip assembly configuration. This system may or may not include a processor and a memory.

Another embodiment provides a method for communicating information in the chip assembly configuration. During operation, an electrical signal is driven from the integrated circuit in the electrical path through the substrate adjacent to the integrated circuit in the chip assembly configuration, wherein the electrical path includes the first connectors disposed on the first surface of the substrate, the second connectors disposed on the second surface of the substrate on the opposite side of the substrate from the first surface, and the interconnectors through the substrate that electrically couple the first connectors and the second connectors. A given interconnector includes two vias electrically coupled by a signal line that includes a region approximately parallel to one of the first surface and the second surface. These vias extend partially through the substrate. Furthermore, a length of the region is less than or equal to 1 mm. Then, the electrical signal is received at the conversion mechanism positioned adjacent to the second surface and electrically coupled to the second connectors. Moreover, using the conversion mechanism, the electrical signal is converted to the optical signal. Next, the optical signal is communicated in the optical interconnect in the chip assembly configuration.

### BRIEF DESCRIPTION OF THE FIGURES

FIG. 1 is a block diagram illustrating a top view of an existing chip package.
FIG. 2 is a block diagram illustrating a side view of a chip assembly configuration in accordance with an embodiment of the present disclosure.
FIG. 3 is a block diagram illustrating a bottom view of the chip assembly configuration of FIG. 2 in accordance with an embodiment of the present disclosure.
FIG. 4 is a block diagram illustrating a side view of a multi-chip module (*MCM*) in accordance with an embodiment of the present disclosure.
FIG. 5 is a block diagram illustrating a system that includes the chip assembly configuration of FIG. 2 in accordance with an embodiment of the present disclosure.
FIG. 6 is a flow diagram illustrating a method for communicating information in a chip assembly configuration in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

Embodiments of a chip assembly configuration, a multi-chip module (*MCM*) that includes the chip assembly configuration, a system that includes the chip assembly configuration, and a technique for communicating information in the chip assembly configuration are described. This chip assembly configuration includes an substrate with an integrated circuit on one side and a conversion mechanism on the other side. The integrated circuit and the conversion mechanism are electrically coupled by a short electrical transmission line through the substrate. Moreover, the conversion mechanism converts signals between an electrical and an optical domain, thereby allowing high-speed communication between the integrated circuit and other components and devices using optical communication (for example, in an optical fiber or an optical waveguide).

By positioning the conversion mechanism (*i.e*., an optical input/output or *I*/*O* port) in close proximity to but on the opposite side of the integrated circuit, the chip assembly configuration may address the challenges associated with lost real estate, latency, and thermal management, thereby allowing the use of dense configurations of optical *I*/*O* ports. As a consequence, the chip assembly configuration may allow the advantages associated with optical interconnects without the problems associated with existing implementations. Therefore, the chip assembly configuration may provide suitable communication and integration characteristics for use with next-generation multi-processor architectures in high-performance computer systems.

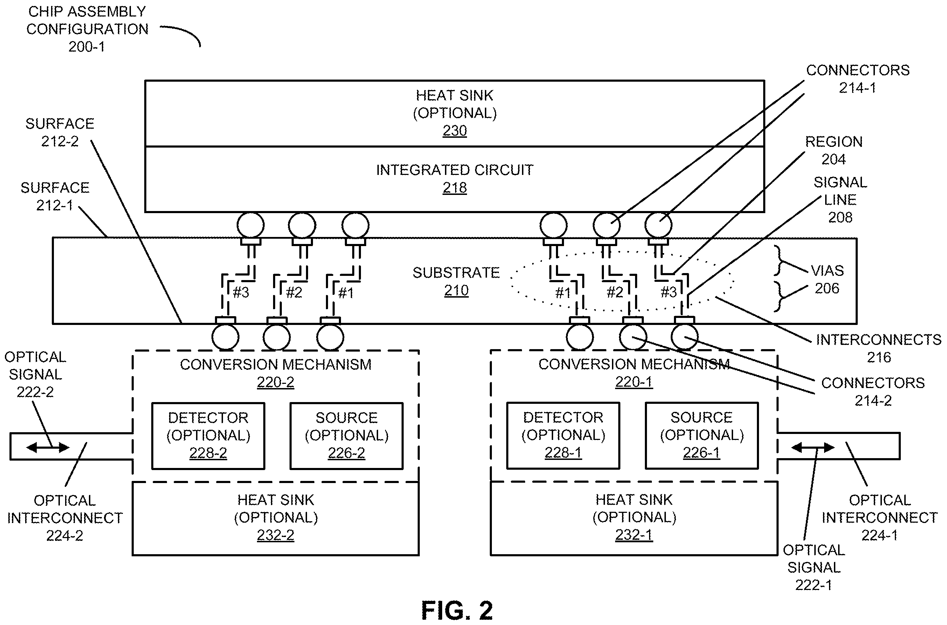

We now describe the chip assembly configuration. FIG. 2 presents a block diagram illustrating a side view of a chip assembly configuration 200-1. This chip assembly configuration includes an substrate 210 (such as a printed-circuit board, a glass substrate, an inorganic substrate, a ceramic substrate, or a plastic substrate), having surfaces 212 on opposite sides of substrate 210, with connectors 214-1 disposed on surface 212-1 and connectors 214-2 disposed on surface 212-2. These connectors are electrically coupled by interconnectors 216 (such as transmission lines) through substrate 210. The combination of a given interconnector and a pair of connectors 214 may constitute an electrical path.

Note that a given interconnector may include two vias 206 electrically coupled by a signal line 208 that includes a region 204 approximately parallel to one of surfaces 212 (*i.e*., which provides a short lateral hop). These vias may extend partially through substrate 210. Furthermore, a length of region 204 may be less than or equal to 1 mm, thereby facilitating high-speed communication with good signal integrity.

Note that a given connect may include a single via electrically coupled by signal lines straight from surface 212-1 to surface 212-2 or vice-versa.

Moreover, chip assembly configuration 200-1 includes an integrated circuit 218 positioned adjacent to surface 212-1 and electrically coupled to connectors 214-1 (for example, by solder and/or a ball-grid array). Furthermore, chip assembly configuration 200-1 includes conversion mechanisms 220 positioned adjacent to surface 212-2 and electrically coupled to connectors 214-2 (for example, by solder and/or a ball-grid array). These conversion mechanisms convert electrical signals from integrated circuit 218 into corresponding optical signals 222-1 and converts optical signals 222-2 to integrated circuit 218 into corresponding electrical signals. Note that optical signals 222 are communicated in chip assembly configuration 200-1 using one or more optical interconnects 224, such as: an optical fiber and/or an optical waveguide (such as an optical waveguide implemented using silicon-on-insulator technology).

In some embodiments, the chip assembly configuration includes optional sources 226 and/or optional detectors 228 that are optically coupled to the one or more optical interconnects 224. Alternatively, the sources and detectors associated with the one or more optical interconnects 224 may be external to chip assembly configuration 200-1.

An average impedance of electrical paths associated with connectors 214-1, connectors 214-2 and interconnectors 216 may approximately match an average impedance of drivers in integrated circuit 218 and in one of conversion mechanisms 220. For example, the average impedance may be 50 Ω with a large associated capacitance. Furthermore, a dominant pole in a transfer characteristic associated with connectors 214-1, connectors 214-2 and interconnectors 216 may facilitate communication between integrated circuit 218 and conversion mechanisms 220 at data rates greater than 10 Gbps.

Furthermore, chip assembly configuration 200-1 may include an optional heat sink 230 thermally coupled to integrated circuit 218 on an opposite side of integrated circuit 218 from substrate 210. This may be useful because thermal stability is important for optical components. This configuration also frees up valuable real estate on surface 212-1, which can be used to reduce crosstalk and/or to increase the component density.

In an exemplary embodiment, each optical-channel driver or receiver *I*/*O* in a given one of conversion mechanisms 220 is electrically coupled to a corresponding high-speed driver/receiver pin on integrated circuit 218 (path #1). In addition, connections to power (path #2) and ground (path #3) are made. As noted previously, these connections may be enabled by two short vias (approximately 150-300 µm tall) and a small jog of an associated transmission line on the platform board layer (for example, less than 1 mm in length). This electrical hop may be the smallest electrical hop that can physically interconnect surfaces 212 (other than a through-via drop from surface 212-1 to surface 212-2, which may not be feasible for all connections). Such a small electrical connection may facilitate the highest data-rate signaling to and from serializer/deserializer *I*/*O* blocks in integrated circuit 218. For example, electrical crossovers and the signal degradation associated with the required additional vias can be avoided. In addition, the power requirements for *I*/*O* drivers may be reduced and/or the use of other communication techniques (such as pre-emphasis or equalization) may be reduced or eliminated.

In some embodiments, each optical *I*/*O* port in an optical subassembly in a given one of conversion mechanisms 220 can support 4, 8, 12 or 16 channels. In general, if the highest possible data rate is assumed for each lane, the number of spatial channels required is usually dictated by the spatial multiplexing or aggregation required for the interface to integrated circuit 218. Conversion mechanisms 220 may each be wide enough to support multiple channels (*e.g*., 4, 8, 12, or 16 channels in 1-*D* or 2-*D* format) within a small footprint while still placing these optical *I*/*O* ports in close proximity to integrated circuits, such as integrated circuit 218.

Furthermore, depending on signal integrity achievable in the layout, each lane may be either single-ended or differential. Note that the optical *I*/*O* ports in the given one of conversion mechanisms 220 may include: a light source (such as a 1-*D* or 2-*D* vertical-cavity surface-emitting laser array that is operated in current or voltage mode), a detector (such as a 1-*D* or 2-*D* photodiode array, *e.g*., a reverse-biased *pn-*junction diode, a pin diode, a metal-semiconductor-metal detector or a resonant-cavity enhanced detector) and associated drivers and receivers (such as a transimpedance amplifier and a limiting amplifier) in the form of electrical integrated circuits that can accommodate data rates up to 40 Gbps (which may be coupled to the optical components by an optical-fiber ribbon). The optical components may be implemented using *III-V* semiconductor compounds (such as GaAs or InP) as the base material.

Furthermore, the optical components may be on the same substrate(s) as the electrical integrated circuits. For example, the optical *I*/*O* ports in conversion mechanisms 220 may be physically attached to substrate 210 using: a reflow assembly process or remateable connections, such as an MEG-array® connector (from FCi, of Guyancourt, France) of micro-pin grid array (µ-PGA) connectors. Moreover, optical connector/optical headers may be used to mate to the optical-fiber ribbons in optical interconnects 224 on standard *MPO*/*MTP* connectors (from Molex® Inc., of Lisle, IL) via passive alignment with respect to the individual transmit or receive channels. These optical headers may support space-division multiplexing (*e.g*., a parallel channel of optical fibers) and/or wavelength-division multiplexing with suitable optical multiplexing/demultiplexing elements.

Because of thermal constraints, the optical *I*/*O* ports in conversion mechanisms 220 may be isolated from the heat generated by integrated circuit 218 during operation. At the same time, heat needs to be removed from the drivers and receivers in the electrical integrated circuits in conversion mechanisms 220. Otherwise, thermal roll-off may degrade the power of the light sources at elevated temperature. As a consequence, conversion mechanisms 220 may be thermally coupled to an optional heat sinks 232, such as a machined-aluminum or a copper block with fins.

In embodiments where integrated circuit 218 is a processor, the tens of high-speed serializer/deserializer electrical *I*/*O* transmission lines can be eliminated. For example, a typical processor includes serializer/deserializer *I*/*O* blocks on the perimeter of the chip, with differential transmission lines connected to the serializer/deserializer *I*/*O* pins. Typically, the number of differential pair lines required equals the bisection bandwidth divided by the maximum data rate per pin. As an illustration, if the aggregate bandwidth to the processor needed is 2 Tbps (a bisection bandwidth of 4 Tbps) and each serializer/deserializer *I*/*O* pin supports 20 Gbps, then the number of pins or transmission lines needed is 2 Tbps divided by 20 Gbps, or 100. Multiplying by two for differential signaling yields 200 pins or transmission lines.

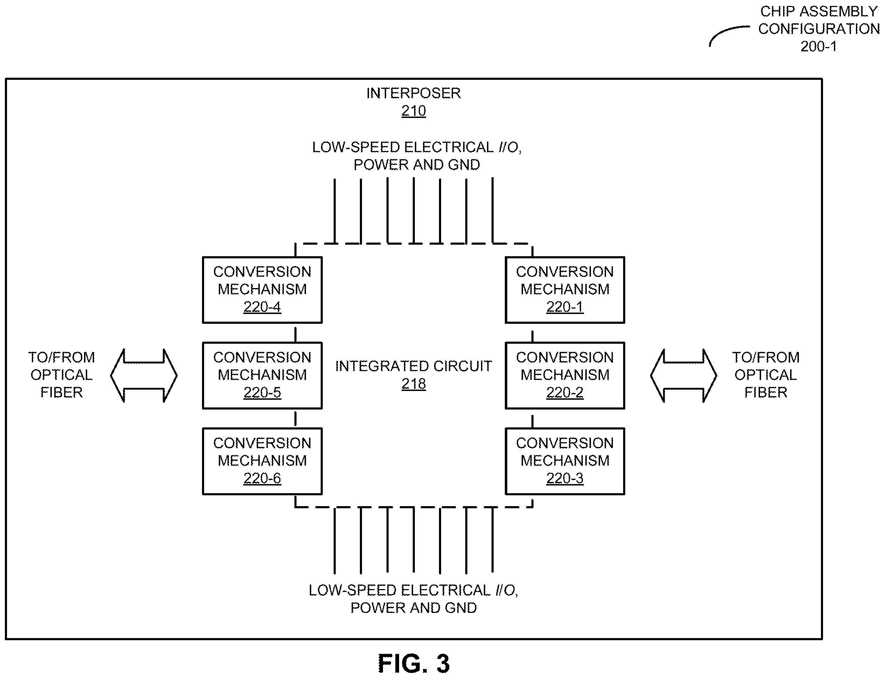

Using the configuration shown in FIG. 3, which presents a block diagram illustrating a bottom view of chip assembly configuration 200-1, multiple arrays of optical assemblies in conversion mechanisms 220 can significantly reduce the number of pins or transmission lines. In addition, this configuration provides tighter integration of one or more processors and memory chips on the top surface of substrate 210, thereby removing or reducing routing congestion and improving signal integrity.

In exemplary embodiments, chip assembly configuration 200-1 is a full-duplex implementation with transmit and receive channels in conversion mechanisms 220. The transmitter (*Tx*) and receiver (*Rx*) optical *I*/*O* port (or optical assemblies) in this configuration may be adjacent to each other (for example, in conversion mechanisms 220-1 and 220-2, respectively). Moreover, this configuration may facilitate 2-16 channels. However, in some embodiments a half-duplex implementation is used with either transmit or receive channels in a given optical *I*/*O* port in a given conversion mechanism. Note that the transmitter and receiver optical assemblies in conversion mechanisms 220 may be physically separated and may be arranged in a wide variety of ways (*e.g*., alternating *Tx* and *Rx*, *Tx Tx Tx Tx* followed by *Rx Rx Rx Rx*, etc.).

In FIG. 2, the optical *I*/*O* ports on surface 212-2 of chip assembly configuration 200-1 can be arranged in several rows or in staggered rows. Physical space permits these arrangements because integrated circuit 218 does not block their paths and interconnectors 216 follow a vertical path through substrate 210. Note that, because interconnectors 216 follow this vertical path, serializer/deserializer *I*/*O* blocks may no longer be constrained to the perimeter of integrated circuit 218. As a consequence, a designer can choose to place the serializer/deserializer *I*/*O* blocks close to the processor chip perimeter and may eliminate corresponding vertical interconnect paths to a given conversion mechanism, such as conversion mechanism 220-1. Furthermore, some areas beneath the processor may be kept clear for bolster plates to mate the processor package to substrate 210.

In an exemplary embodiment, the optical *I*/*O* ports in conversion mechanisms 220 are based on vertical-cavity surface-emitting laser technology with wavelengths of 850, 1301 or 1550 nm and a corresponding GaAs or InP detector technology. Furthermore, the optical *I*/*O* ports in conversion mechanisms 220 may be based on a silicon-photonics technology that can support single-mode (*i.e*., wavelength-division multiplexing) and/or multi-mode optical fibers (*i.e*., space-division multiplexing) using a reduced number of distributed-feedback laser arrays.

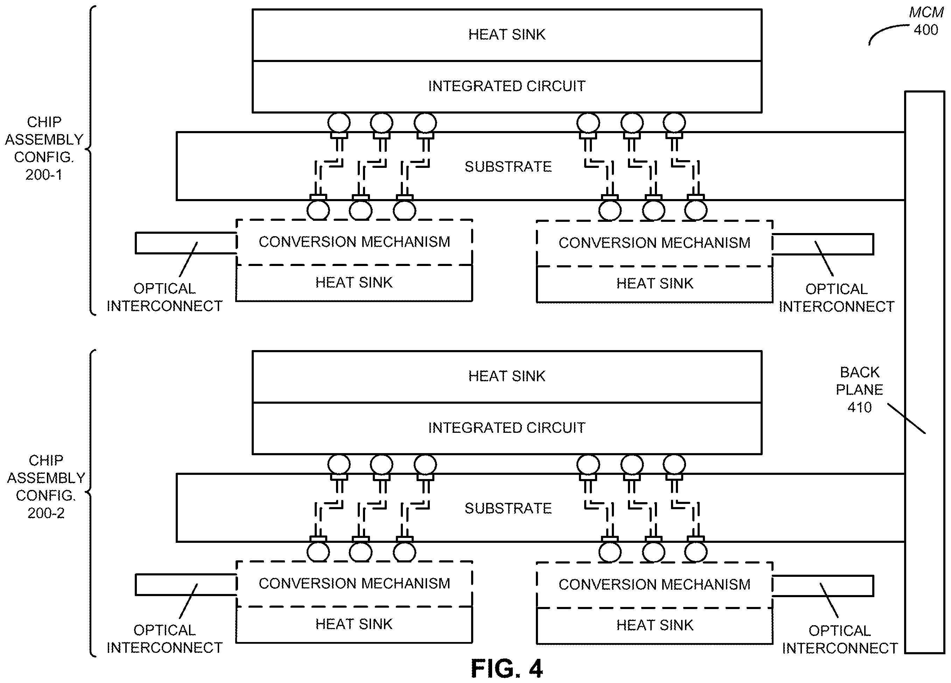

Multiple instances of chip assembly configuration 200-1 may be included in a multi-chip module (*MCM*). This is shown in FIG. 4, which presents a block diagram illustrating a side view of a multi-chip module *MCM* 400 with chip assembly configurations 200 connected to a backplane 410. Note that with the arrangement of the optical *I*/*O* ports in conversion mechanisms on the bottom sides of the substrates, bulky copper cables may be replaced with thin optical-fiber ribbons, which can all be aggregated into a high-density, compact, optical-fiber-connector patch panel.

This configuration may allow the optical signals to be redistributed internally and/or externally to *MCM* 400 using electrical and/or optical switches. Moreover, this configuration may allow unconstrained air flow between the substrates, both for the integrated circuits and the conversion mechanisms. Furthermore, by removing bulky copper cables, additional cable-management support harnesses may not be needed. (Thus, chip assembly configurations 200 may provide enhanced reliability.) In addition, the optical *I*/*O* ports in the conversion mechanisms can be arranged directly below the other chips, as well as switches, memory, etc., thereby reducing the length of electrical signal lines to these components.

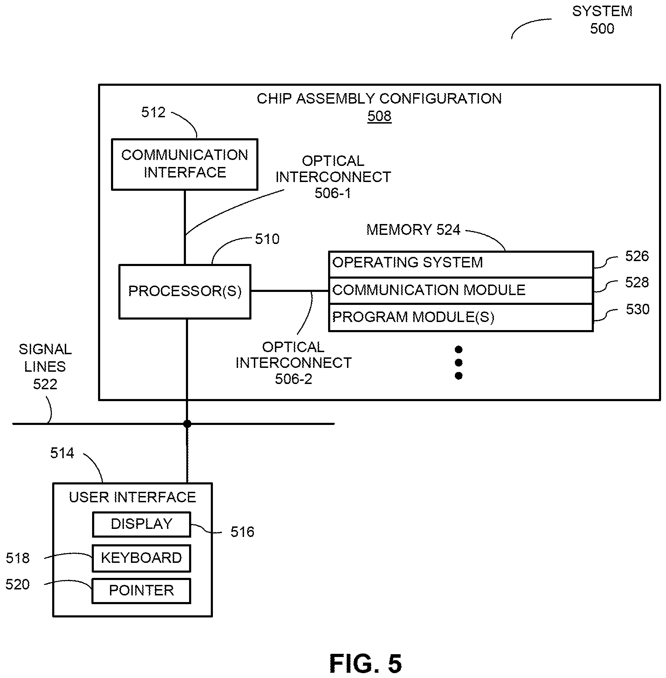

The chip assembly configuration may be used in a variety of applications. This is shown in FIG. 5, which presents a block diagram illustrating a system 500 that includes a chip assembly configuration 508, such as chip assembly configuration 200-1 (FIG. 2). Optical interconnects 506 on or optically coupled to conversion mechanisms in chip assembly configuration 508 may couple one or more processors 510, memory 524 and/or a communication interface 512. Moreover, one or more processors 510 may be coupled to user interface 514 by one or more signal lines 522. Note that the one or more processors (or processor cores) 510 may support parallel processing and/or multi-threaded operation, the communication interface 512 may have a persistent communication connection, and the one or more signal lines 522 may constitute a communication bus. Furthermore, the user interface 514 may include: a display 516, a keyboard 518, and/or a pointer 520, such as a mouse.

Memory 524 in system 500 may include volatile memory and/or non-volatile memory. More specifically, memory 524 may include: *ROM*, *RAM*, *EPROM*, *EEPROM*, flash, one or more smart cards, one or more magnetic disc storage devices, and/or one or more optical storage devices. Memory 524 may store an operating system 526 that includes procedures (or a set of instructions) for handling various basic system services for performing hardware-dependent tasks. Moreover, memory 524 may also store communications procedures (or a set of instructions) in a communication module 528. These communication procedures may be used for communicating with one or more computers, devices and/or servers, including computers, devices and/or servers that are remotely located with respect to the system 500.

Memory 524 may also include one or more program modules 530 (or a set of instructions). Note that one or more of program modules 530 may constitute a computer-program mechanism. Instructions in the various modules in the memory 524 may be implemented in: a high-level procedural language, an object-oriented programming language, and/or in an assembly or machine language. The programming language may be compiled or interpreted, *i.e*., configurable or configured, to be executed by the one or more processors (or processor cores) 510.

System 500 may include: a *VLSI* circuit, a switch, a hub, a bridge, a router, a communication system (such as in wavelength division multiplexing), a storage area network, a data center, a network (such as a local area network), and/or a computer system (such as a multiple-core processor computer system). For example, the chip assembly configuration may be included in a backplane that is coupled to multiple processor blades or, as shown in FIG. 4, in an *MCM* that couples different types of components (such as processors, memory, *I*/*O* devices, and/or peripheral devices). In some embodiments, this *MCM* performs the functions of: a switch, a hub, a bridge, and/or a router.

Furthermore, the computer system may include, but is not limited to: a server (such as a multi-socket, multi-rack server), a laptop computer, a communication device or system, a personal computer, a work station, a mainframe computer, a blade, an enterprise computer, a data center, a portable-computing device, a tablet, a supercomputer, a network-attached-storage (*NAS*) system, a storage-area-network (*SAN*) system, and/or another electronic computing device.

In general, system 500 may be at one location or may be distributed over multiple, geographically dispersed locations. Moreover, some or all of the functionality of system 500 may be implemented in one or more application-specific integrated circuits (*ASICs*) and/or one or more digital signal processors (*DSPs*). Furthermore, functionality in the preceding embodiments may be implemented more in hardware and less in software, or less in hardware and more in software, as is known in the art.

The preceding embodiments may include fewer components or additional components. Moreover, although the chip assembly configuration and system are illustrated as having a number of discrete items, these embodiments are intended to be functional descriptions of the various features that may be present rather than structural schematics of the embodiments described herein. Consequently, in these embodiments, two or more components may be combined into a single component and/or a position of one or more components may be changed. Furthermore, features in two or more of the preceding embodiments may be combined with one another.

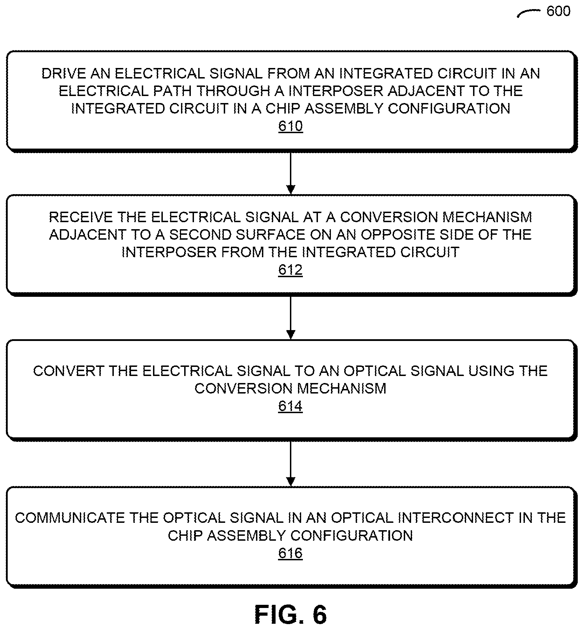

We now describe embodiments of the method. FIG. 6 presents a flow diagram illustrating a method 600 for communicating information in a chip assembly configuration, which may be chip assembly configuration 200-1 (FIG. 2). During operation, an electrical signal is driven from an integrated circuit in an electrical path through an substrate adjacent to the integrated circuit in the chip assembly configuration (operation 610), wherein the electrical path includes first connectors disposed on a first surface of the substrate, second connectors disposed on a second surface of the substrate on an opposite side of the substrate from the first surface, and interconnectors through the substrate that electrically couple the first connectors and the second connectors. Then, the electrical signal is received at a conversion mechanism positioned adjacent to the second surface and electrically coupled to the second connectors (operation 612). Moreover, using the conversion mechanism, the electrical signal is converted to an optical signal (operation 614). Next, the optical signal is communicated in an optical interconnect in the chip assembly configuration (operation 616).

In some embodiments, method 600 includes additional or fewer operations. Moreover, the order of the operations may be changed, and/or two or more operations may be combined into a single operation.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein may be applied to other embodiments and applications without departing from the scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

## Claims

1. A chip assembly configuration (200-1), comprising:
a substrate (210), having a first surface (212-1) and a second surface (212-2) on an opposite side of the substrate from the first surface, with first connectors (214-1) disposed on the first surface and second connectors (214-2) disposed on the second surface, wherein the first connectors and the second connectors are electrically coupled by interconnectors (216) through the substrate;
wherein a given interconnector includes two vias (206) electrically coupled by a signal line (208) that includes a region (204) approximately parallel to one of the first surface and the second surface,
wherein the vias extend partially through the substrate, and
wherein a length of the region is less than or equal to 1 mm;
an integrated circuit (218) positioned adjacent to the first surface and electrically coupled to the first connectors; and
a conversion mechanism (220-1, 220-2) positioned adjacent to the second surface and electrically coupled to the second connectors, wherein the conversion mechanism is configured to convert electrical signals from the integrated circuit into corresponding first optical signals (222-1) and to convert second optical signals (222-2) to the integrated circuit into corresponding second electrical signals; and
wherein the first optical signals and the second optical signals are communicated in the chip assembly configuration using an optical interconnect (224-1, 224-2).

2. The chip assembly configuration of claim 1, wherein the substrate includes one of: a printed circuit board and a interposer.

3. The chip assembly configuration of claim 2, wherein the substrate includes one of: a semiconductor, an organic material, a ceramic, a glass, and a plastic.

4. The chip assembly configuration of any one of the preceding claims, further comprising sources and detectors optically coupled to the optical interconnect.

5. The chip assembly configuration of any one of the preceding claims, wherein sources and detectors associated with the optical interconnect are external to the chip assembly configuration.

6. The chip assembly configuration of any one of the preceding claims, wherein the optical interconnects include one of: an optical fiber and an optical waveguide.

7. The chip assembly configuration of any one of the preceding claims, wherein the first connectors and the integrated circuit are electrically coupled by one of: solder and a ball-grid array.

8. The chip assembly configuration of any one of the preceding claims, wherein the second connectors and the conversion mechanism are electrically coupled by one of: solder, a ball-grid array, a socket, an interposer, and a land grid array.

9. The chip assembly configuration of any one of the preceding claims, wherein an average impedance of electrical paths associated with the first connectors, the second connectors and the interconnectors approximately matches an average impedance of drivers in the integrated circuit and the conversion mechanism.

10. The chip assembly configuration of claim 9, wherein the average impedance approximately equals 50 Ω.

11. The chip assembly configuration of any one of the preceding claims, further comprising a heat sink thermally coupled to the integrated circuit on an opposite side of the integrated circuit from the substrate.

12. A system, comprising:
a processor;
a memory storing a program module that is configured to be executed by the processor; and
the chip assembly configuration of any one of claims 1-11.

13. A method for communicating information in a chip assembly configuration, the method comprising:
driving an electrical signal from an integrated circuit in an electrical path through a substrate adjacent to the integrated circuit in the chip assembly configuration, wherein the electrical path includes first connectors disposed on a first surface of the substrate, second connectors disposed on a second surface of the substrate on an opposite side of the substrate from the first surface, and interconnectors through the substrate that electrically couple the first connectors and the second connectors,
wherein a given interconnector includes two vias electrically coupled by a signal line that includes a region approximately parallel to one of the first surface and the second surface,
wherein the vias extend partially through the substrate, and
wherein a length of the region is less than or equal to 1 mm;
receiving the electrical signal at a conversion mechanism positioned adjacent to the second surface and electrically coupled to the second connectors;
using the conversion mechanism, converting the electrical signal to an optical signal; and
communicating the optical signal in an optical interconnect in the chip assembly configuration.

## Patentansprüche

1. Chipbaugruppenkonfiguration (200-1), die Folgendes umfasst:
ein Substrat (210), das eine erste Oberfläche (212-1) und eine zweite Oberfläche (212-2) auf einer von der ersten Oberfläche gegenüberliegenden Seite des Substrats aufweist, mit ersten Verbindern (214-1), die auf der ersten Oberfläche angeordnet sind, und zweiten Verbindern (214-2), die auf der zweiten Oberfläche angeordnet sind, wobei die ersten Verbinder und die zweiten Verbinder durch Zwischenverbinder (216) durch das Substrat hindurch elektrisch gekoppelt sind;
wobei ein gegebener Zwischenverbinder zwei Vias (206) beinhaltet, die elektrisch durch eine Signalleitung (208) gekoppelt sind, die ein Gebiet (204) näherungsweise parallel zu der ersten Oberfläche oder der zweiten Oberfläche beinhaltet,
wobei sich die Vias teilweise durch das Substrat hindurch erstrecken, und
wobei eine Länge des Gebiets kleiner als oder gleich 1 mm ist;
einen integrierten Schaltkreis (218), der angrenzend an die erste Oberfläche positioniert ist und elektrisch mit den ersten Verbindern gekoppelt ist; und
einen Umwandlungsmechanismus (220-1, 220-2), der angrenzend an die zweite Oberfläche positioniert ist und elektrisch mit den zweiten Verbindern gekoppelt ist, wobei der Umwandlungsmechanismus dazu konfiguriert ist, elektrische Signale von dem integrierten Schaltkreis in entsprechende erste optische Signale (222-1) umzuwandeln und zweite optische Signale (222-2) zu dem integrierten Schaltkreis in entsprechende zweite elektrische Signale umzuwandeln; und
wobei die ersten optischen Signale und die zweiten optischen Signale in der Chipbaugruppenkonfiguration unter Verwendung einer optischen Zwischenverbindung (224-1, 224-2) kommuniziert werden.

2. Chipbaugruppenkonfiguration nach Anspruch 1, wobei das Substrat eines von Folgendem umfasst: eine Leiterplatte und einen Interposer.

3. Chipbaugruppenkonfiguration nach Anspruch 2, wobei das Substrat eines von Folgendem umfasst: einen Halbleiter, ein organisches Material, eine Keramik, ein Glas und einen Kunststoff.

4. Chipbaugruppenkonfiguration nach einem der vorhergehenden Ansprüche, die ferner Quellen und Detektoren umfasst, die optisch mit der optischen Zwischenverbindung gekoppelt sind.

5. Chipbaugruppenkonfiguration nach einem der vorhergehenden Ansprüche, wobei Quellen und Detektoren, die mit der optischen Zwischenverbindung assoziiert sind, außerhalb der Chipbaugruppenkonfiguration sind.

6. Chipbaugruppenkonfiguration nach einem der vorhergehenden Ansprüche, wobei die optischen Zwischenverbindungen eines von Folgendem umfassen: eine optische Faser und einen optischen Wellenleiter.

7. Chipbaugruppenkonfiguration nach einem der vorhergehenden Ansprüche, wobei die ersten Verbinder und der integrierte Schaltkreis elektrisch durch eines von Folgendem gekoppelt sind: Lot und eine Kugelgitteranordnung.

8. Chipbaugruppenkonfiguration nach einem der vorhergehenden Ansprüche, wobei die zweiten Verbinder und der Umwandlungsmechanismus elektrisch durch eines von Folgendem gekoppelt sind: Lot, eine Kugelgitteranordnung, einen Sockel, einen Interposer und ein Land-Grid-Array.

9. Chipbaugruppenkonfiguration nach einem der vorhergehenden Ansprüche, wobei eine durchschnittliche Impedanz elektrischer Pfade, die mit den ersten Verbindern, den zweiten Verbindern und den Zwischenverbindern assoziiert sind, näherungsweise einer durchschnittlichen Impedanz von Treibern in dem integrierten Schaltkreis und dem Umwandlungsmechanismus entspricht.

10. Chipbaugruppenkonfiguration nach Anspruch 9, wobei die durchschnittliche Impedanz näherungsweise gleich 50 Ω beträgt.

11. Chipbaugruppenkonfiguration nach einem der vorhergehenden Ansprüche, die ferner einen Kühlkörper, der thermisch mit dem integrierten Schaltkreis gekoppelt ist, auf einer von dem Substrat gegenüberliegenden Seite des integrierten Schaltkreises umfasst.

12. System, das Folgendes umfasst:
einen Prozessor;
einen Speicher, der ein Programmmodul speichert, das zur Ausführung durch den Prozessor konfiguriert ist; und
die Chipbaugruppenkonfiguration nach einem der Ansprüche 1-11.

13. Verfahren zum Kommunizieren von Informationen in einer Chipbaugruppenkonfiguration, wobei das Verfahren Folgendes umfasst:
Ansteuern eines elektrischen Signals von einem integrierten Schaltkreis in einem elektrischen Pfad durch ein Substrat angrenzend an den integrierten Schaltkreis in der Chipbaugruppenkonfiguration hindurch, wobei der elektrische Pfad erste Verbinder, die auf einer ersten Oberfläche des Substrats angeordnet sind, zweite Verbinder, die auf einer zweiten Oberfläche des Substrats auf einer von der ersten Oberfläche gegenüberliegenden Seite des Substrats angeordnet sind, und Zwischenverbinder durch das Substrat hindurch, die die ersten Verbinder und die zweiten Verbinder elektrisch koppeln, beinhaltet,
wobei ein gegebener Zwischenverbinder zwei Vias beinhaltet, die elektrisch durch eine Signalleitung gekoppelt sind, die ein Gebiet näherungsweise parallel zu der ersten Oberfläche oder der zweiten Oberfläche beinhaltet,
wobei sich die Vias teilweise durch das Substrat hindurch erstrecken, und
wobei eine Länge des Gebiets kleiner als oder gleich 1 mm ist;
Empfangen des elektrischen Signals bei einem Umwandlungsmechanismus, der angrenzend an die zweite Oberfläche positioniert ist und elektrisch mit den zweiten Verbindern gekoppelt ist;
Umwandeln des elektrischen Signals unter Verwendung des Umwandlungsmechanismus in ein optisches Signal; und
Kommunizieren des optischen Signals in einer optischen Zwischenverbindung in der Chipbaugruppenkonfiguration.

## Revendications

1. Configuration d'ensemble puce (200-1), comprenant :
un substrat (210), ayant une première surface (212-1) et une deuxième surface (212-2) sur un côté opposé du substrat par rapport à la première surface, avec des premiers connecteurs (214-1) disposés sur la première surface et des deuxièmes connecteurs (214-2) disposés sur la deuxième surface, les premiers connecteurs et les deuxièmes connecteurs étant électriquement couplés par des interconnecteurs (216) à travers le substrat ;
une interconnecteur donné comportant deux trous d'interconnexion (206) électriquement couplés par une ligne de signal (208) qui comporte une région (204) approximativement parallèle soit à la première surface, soit à la deuxième surface,
les trous d'interconnexion s'étendant partiellement à travers le substrat, et
une longueur de la région étant inférieure ou égale à 1 mm ;
un circuit intégré (218) positionné de façon adjacente à la première surface et électriquement couplé aux premiers connecteurs ; et
un mécanisme de conversion (220-1, 220-2) positionné de façon adjacente à la deuxième surface et électriquement couplé aux deuxièmes connecteurs, le mécanisme de conversion étant configuré pour convertir des signaux électriques provenant du circuit intégré en premiers signaux optiques correspondants (222-1) et pour convertir des deuxièmes signaux optiques (222-2) à destination du circuit intégré en deuxièmes signaux électriques correspondants ; et
dans laquelle les premiers signaux optiques et les deuxièmes signaux optiques sont communiqués dans la configuration d'ensemble puce au moyen d'une interconnexion optique (224-1, 224-2).

2. Configuration d'ensemble puce de la revendication 1, dans laquelle le substrat comporte un élément parmi : une carte de circuit imprimé et un interposeur.

3. Configuration d'ensemble puce de la revendication 2, dans laquelle le substrat comporte un élément parmi : un semi-conducteur, un matériau organique, une céramique, un verre, et un plastique.

4. Configuration d'ensemble puce de l'une quelconque des revendications précédentes, comprenant en outre des sources et des détecteurs optiquement couplés à l'interconnexion optique.

5. Configuration d'ensemble puce de l'une quelconque des revendications précédentes, dans laquelle des sources et des détecteurs associés à l'interconnexion optique sont externes à la configuration d'ensemble puce.

6. Configuration d'ensemble puce de l'une quelconque des revendications précédentes, dans laquelle les interconnexions optiques comportent un élément parmi : une fibre optique et un guide d'ondes optiques.

7. Configuration d'ensemble puce de l'une quelconque des revendications précédentes, dans laquelle les premiers connecteurs et le circuit intégré sont électriquement couplés par un élément parmi : une brasure et un boîtier matriciel à billes.

8. Configuration d'ensemble puce de l'une quelconque des revendications précédentes, dans laquelle les deuxièmes connecteurs et le mécanisme de conversion sont électriquement couplés par un élément parmi : une brasure, un boîtier matriciel à billes, une prise, un interposeur, et un boîtier matriciel à plots.

9. Configuration d'ensemble puce de l'une quelconque des revendications précédentes, dans laquelle une impédance moyenne de chemins électriques associés aux premiers connecteurs, aux deuxièmes connecteurs et aux interconnecteurs correspond approximativement à une impédance moyenne de pilotes dans le circuit intégré et le mécanisme de conversion.

10. Configuration d'ensemble puce de la revendication 9, dans laquelle l'impédance moyenne est approximativement égale à 50 Ω.

11. Configuration d'ensemble puce de l'une quelconque des revendications précédentes, comprenant en outre un dissipateur thermique thermiquement couplé au circuit intégré sur un côté opposé du circuit intégré par rapport au substrat.

12. Système, comprenant :
un processeur ;
une mémoire stockant un module de programme qui est configuré pour être exécuté par le processeur ; et
la configuration d'ensemble puce de l'une quelconque des revendications 1 à 11.

13. Procédé de communication d'informations dans une configuration d'ensemble puce, le procédé comprenant :
l'acheminement d'un signal électrique depuis un circuit intégré sur un chemin électrique à travers un substrat adjacent au circuit intégré dans la configuration d'ensemble puce, le chemin électrique comportant des premiers connecteurs disposés sur une première surface du substrat, des deuxièmes connecteurs disposés sur une deuxième surface du substrat sur un côté opposé du substrat par rapport à la première surface, et des interconnecteurs à travers le substrat qui couplent électriquement les premiers connecteurs et les deuxièmes connecteurs,
un interconnecteur donné comportant deux trous d'interconnexion électriquement couplés par une ligne de signal qui comporte une région approximativement parallèle soit à la première surface, soit à la deuxième surface,
les trous d'interconnexion s'étendant partiellement à travers le substrat, et
une longueur de la région étant inférieure ou égale à 1 mm ;
la réception du signal électrique au niveau d'un mécanisme conversion positionné de façon adjacente à la deuxième surface et électriquement couplé aux deuxièmes connecteurs ;
au moyen du mécanisme de conversion, la conversion du signal électrique en un signal optique ; et
la communication du signal optique dans une interconnexion optique dans la configuration d'ensemble puce.
